(19) Europäisches Patentamt
European Patent Office
Office européen des brevets

(11) **EP 3 815 582 B1**

(12) **EUROPÄISCHE PATENTSCHRIFT**

(45) Veröffentlichungstag und Bekanntmachung des Hinweises auf die Patenterteilung:
**25.05.2022   Patentblatt 2022/21**

(21) Anmeldenummer: **20000386.1**

(22) Anmeldetag: **27.10.2020**

(51) Internationale Patentklassifikation (IPC):
**A47G 7/04** *(2006.01)*

(52) Gemeinsame Patentklassifikation (CPC):
**A47G 7/041; A01G 9/023; A01G 9/024**

(54) **RAUMTEILER AUS TRAGSTANGEN UND STRUKTURCONTAINERN**

SPACE DIVIDER COMPRISING SUPPORT RODS AND STRUCTURAL CONTAINERS

SÉPARATEUR D'ESPACE EN TIGES PORTEUSES ET RÉCIPIENTS DE STRUTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2019   DE 102019007475**

(43) Veröffentlichungstag der Anmeldung:
**05.05.2021   Patentblatt 2021/18**

(73) Patentinhaber: **Brunner GmbH**
**77866 Rheinau (DE)**

(72) Erfinder: **Brunner, Marc**
**77866 Rheinau (DE)**

(74) Vertreter: **Thämer, Wolfgang**
**Zürn & Thämer**
**Patentanwälte**
**Hermann-Köhl-Weg 8**
**76571 Gaggenau (DE)**

(56) Entgegenhaltungen:
**EP-A1- 3 245 863     US-B1- 9 877 436**
**US-B2- 7 886 482**

**Beschreibung**

Die Erfindung betrifft einen Raumteiler aus vertikal stehenden Tragstangen und diese verbindenden Strukturcontainern.

Aus der DE 297 16 761 U1 ist ein Anbaumöbel als Raumteiler bekannt. Der Raumteiler weist vertikale Seitenstreben auf, die sich auf untereinander verbundenen Fußplatten abstützen. Die rotationssymmetrischen Seitenstreben haben durchgehende Mittelachsen. Zwischen den Seitenstreben sind Regalbretter, Arbeitsflächen, Pinbretter oder dergleichen eingehängt. Je zwei Seitenstreben und die dazwischen eingehängten Regalteile bilden eine Regalspalte. Werden mehrere miteinander verknüpfte Regalspalten benutzt, die nicht in einer Flucht liegen, dienen die Mittelachsen der Seitenstreben als zwischen den benachbart angeordneten Regalspalten liegende Schwenkachsen. EP 3 245 863 A1 offenbart einen Raumteiler nach dem Oberbegriff des Anspruchs 1.

Der vorliegenden Erfindung liegt die Problemstellung zugrunde, einen teildurchsichtigen Raumteiler zu entwickeln, der aus einfachen Elementen variabel zusammenbaubar ist und der bei wenigen unterschiedlichen Elementen einen sicheren Stand aufweist.

Diese Problemstellung wird mit den Merkmalen des Patentanspruchs 1 gelöst. Dabei sind an den Tragstangen an einander gegenüberliegenden Stangenseiten Befestigungsmittel zum Anordnen mehrerer Strukturcontainer oder anderer An- oder Zwischenbauelemente vorhanden. Der einzelne Strukturcontainer weist eine Containermittellinie auf, in der mindestens zwei sich schneidende Befestigungsebenen - zur Anordnung von containerseitigen Befestigungsmitteln - liegen. Zwischen zwei benachbarten Tragstangen sind mindestens ein einzelner oder mehrere übereinander mit Abstand platzierte Strukturcontainer angeordnet.

Der nicht blickdichte, ggf. begrünbare Raumteiler besteht im Wesentlichen aus auf Fußplatten stehenden Tragstangen und daran befestigten Strukturcontainern. Die Strukturcontainer halten dabei die Tragstangen definiert auf Abstand. Sofern die Summe der Tragstangen im Grundriss nicht entlang einer Linie angeordnet ist, steht der Raumteiler stabil frei im Raum, ohne dass Teile von ihm an der Aufstandsfläche, der Raumdecke oder einer Zimmerwand befestigt sind. Der Strukturcontainer ist dabei ein formsteifer topfartiger Container, der mehrere Anbaumöglichkeiten für die einzelnen Tragstangen zur Verfügung stellt. Durch seine Topfform eignet er sich für die Aufnahme von Pflanzkübeln, in denen z.B. ganzjährig Zimmerpflanzen kultiviert werden. Für die Innenraumbegrünung sind die in den Strukturcontainern eingesetzten Pflanztöpfe u.a. über die bodenseitigen Ausnehmungen der Strukturcontainer mittels eines Bewässerungssystems mit Gießwasser automatisiert versorgbar.

Anstelle der Strukturcontainer können zwischen den Tragstangen auch andere, die Tragstangen auf Abstand haltende und fixierende An- oder Zwischenbauelemente verwendet werden. Letztere sind beispielsweise schmale kurze, z.B. spiegeltragende Trennwände mit seitlich liegenden Befestigungslaschen. Eine andere Alternative sind mit einem Stützrahmen versehene kleine Bücherregale, die einseitig oder beidseitig offen sind. Auch quader-, würfel- oder zylinderförmige Aufbewahrungsbehälter können an oder zwischen den Tragstangen angeordnet werden.

Weitere Einzelheiten der Erfindung ergeben sich aus den Unteransprüchen und der nachfolgenden Beschreibung einer schematisch dargestellten Ausführungsform.

Figur 1:     perspektivische Ansicht des zweifach abgeknickten Raumteilers;
Figur 2:     Draufsicht zu Figur 1;
Figur 3:     Seitenansicht einer Tragstange mit vier Strukturcontainern;
Figur 4:     Schnitt durch einen Strukturcontainer mit einem Abstandshalter;
Figur 5:     Draufsicht auf einen Strukturcontainer nach Figur 4;
Figur 6:     perspektivische Explosionsansicht des obenliegenden Bereichs eines Vollelements;
Figur 7:     perspektivische Ansicht eines Verbindungsrohres;
Figur 8:     Seitenansicht einer Verbindungsstelle zweier Tragrohre;
Figur 9:     Schnitt durch die Verbindungsstelle nach Figur 8, jedoch um 90 Winkelgrade gedreht und mit einem Teilschnitt eines Strukturcontainers;
Figur 10:   Querschnitt zu Figur 9 in Höhe der zwischen den Tragrohren gelegenen Montagefuge;
Figur 11:   perspektivische Ansicht des Abstandshalters mit Verdrehsicherung;
Figur 12:   Längsschnitt durch das untere Ende einer Tragstange;
Figur 13:   Schnitt eines die Fußplatte aufnehmenden an der Aufstandsfläche befestigbaren Positioniertopfes.

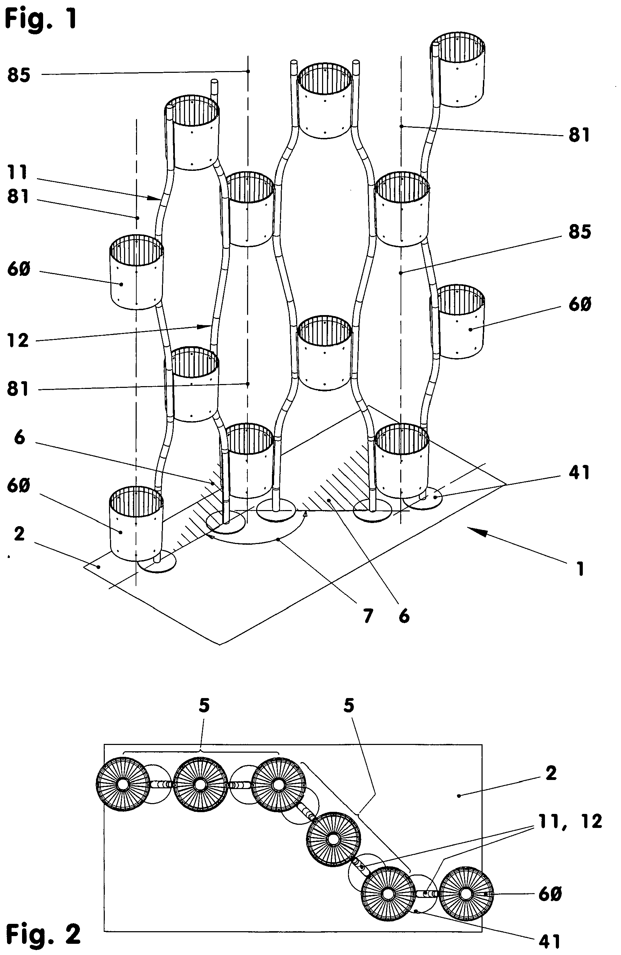

Die Figur 1 zeigt einen freistehenden Raumteiler (1), der in seiner Grundausstattung im Wesentlichen aus vertikal aufgestellten Tragstangen (11, 12) und daran befestigten Strukturcontainern (60) besteht. Über die Strukturcontainer (60) werden die Tragstangen (11, 12) untereinander formsteif verbunden. Im Idealfall besteht ein Raumteiler (1) aus mindestens vier Tragstangen (11, 12), von denen je zwei als Paar ein Vollelement (5) darstellen. Jedes Vollelement (5) hat eine Raumteilerteilebene (6). Mindestens zwei benachbarte Raumteilerteilebenen (6) schließen einen Aufstellwinkel ein, der z.B. in 45-Winkelgradschritten zwischen z.B. 45 und 315 Winkelgraden liegt.

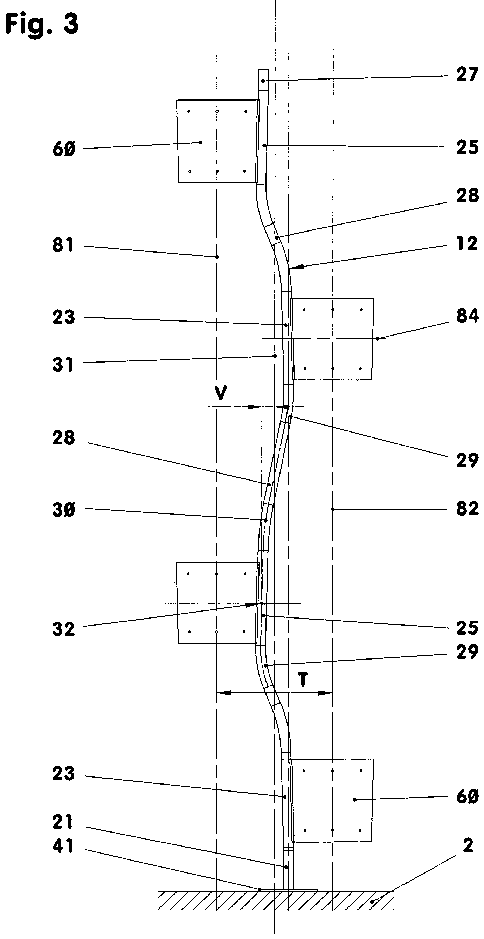

In der Figur 3 ist eine z.B. 2,5 m lange Tragstange (11, 12) dargestellt, an der z.B. vier Strukturcontainer (60) befestigt sind. Die ggf. einteilige Tragstange (11, 12) besteht aus einem Stahlrohr, das bei einem Außendurchmesser von z.B. 30 mm eine Wandstärke von z.B. 2 mm aufweist. Die zumindest annähernd wellenförmig gebogene Tragstange (11, 12) besteht aus einer abwechselnden Aneinanderreihung von geraden (21-28) und z.B. kreisbogenförmig geformten Rohrabschnitten (29). Die durch die Mitten aller Rohrabschnitte (21-29) verlaufende, mehrfach gebogene Mittellinie wird als reale Rohrmittellinie (30) bezeichnet. Letztere liegt in einer Ebene, die der Raumteilerteilebene (6), vgl. Figur 1, entspricht.

Die wellenförmig gebogene Rohrmittellinie (30) weist in horizontaler Richtung, parallel zur Aufstandsfläche (2), Wellenberge und Wellentäler auf. Mittig zwischen den in der Raumteilerteilebene (6) gelegenen Wellenbergen ist eine theoretische Stangenmittellinie (31) definierbar, vgl. Figur 3. Beidseits dieser Stangenmittellinie (31) sind die beiden Containermittellinien (81, 82) im Abstand von z.B. 175 mm parallel angeordnet. Die z.B. vertikalen Containermittellinien (81, 82) liegen ebenfalls in der Raumteilerteilebene (6).

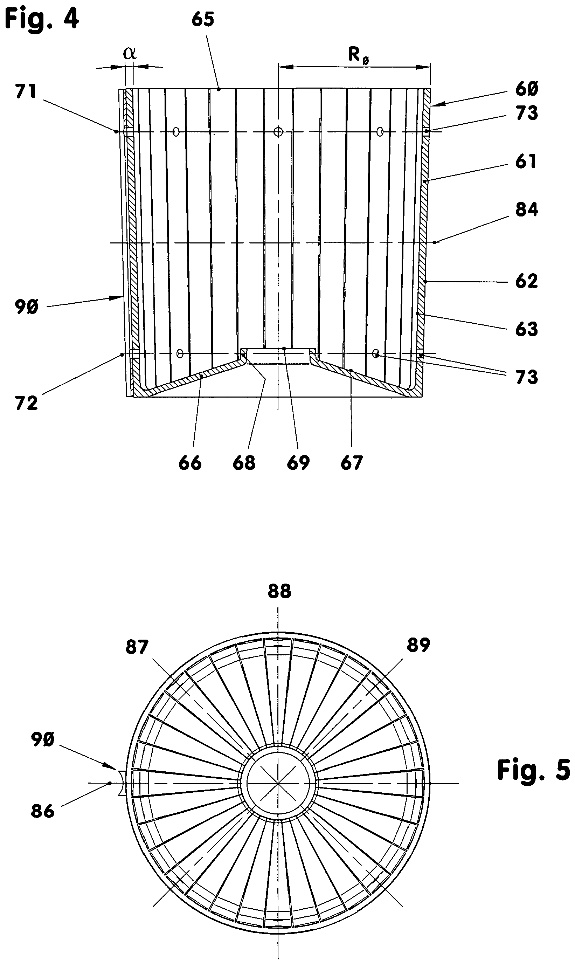

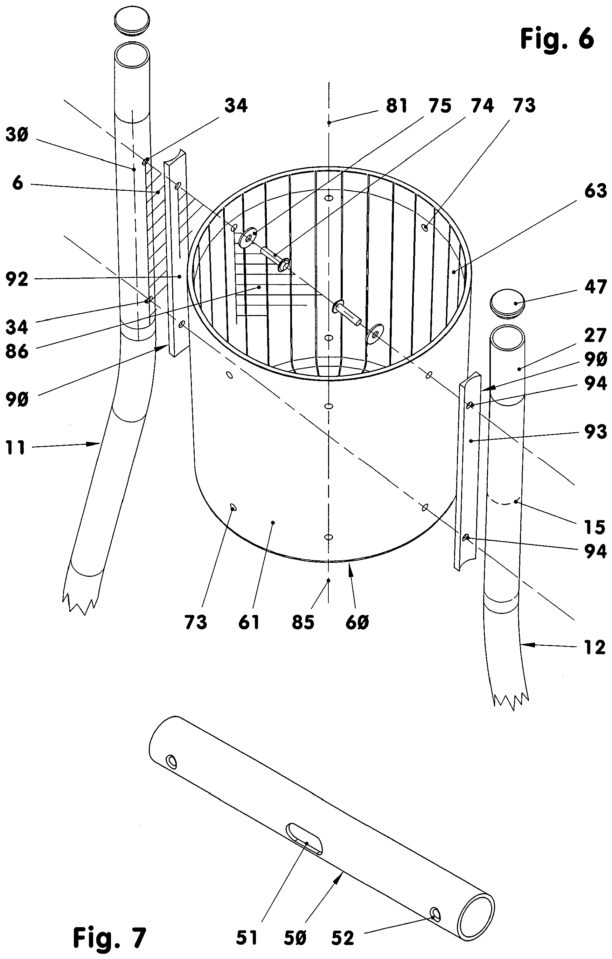

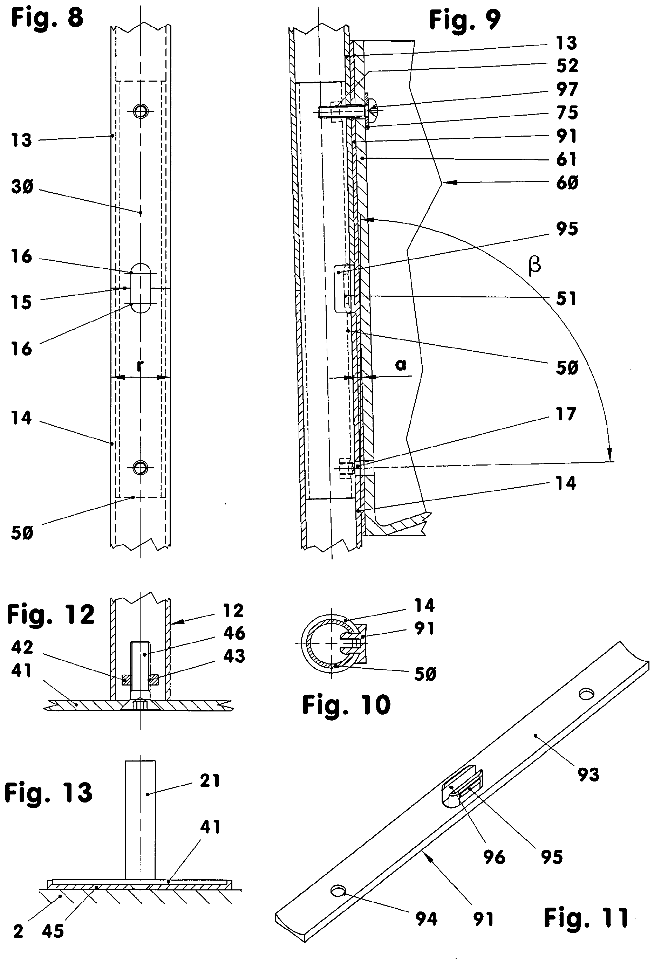

Der erste gerade Rohrabschnitt ist der z.B. 120 mm lange Fußrohrabschnitt (21), der in Figur 3 nur beispielhaft senkrecht auf einer runden Fußplatte (41) angeordnet ist. Oberhalb des Fußrohrabschnitts (21) weist die Tragstange (12) hier vier gerade Befestigungsrohrabschnitte (23, 25) auf. An jedem Befestigungsrohrabschnitt (23, 25) kann ein Strukturcontainer (60) befestigt sein. Die Befestigungsrohrabschnitte (23, 25) haben eine Länge, die z.B. mindestens der Höhe des Strukturcontainers (60) entspricht. Sie sind gegenüber der theoretischen Stangenmittellinie (31) um den Kegelhalbwinkel a, vgl. Figur 4, der Außenwandung (61) des Strukturcontainers (60) geneigt. Die Befestigungsrohrabschnitte (23, 25) haben - an den Stangenseiten - Befestigungsbohrungen (34) für die Container (60) in der Form von z. B. M6-Fließgewinden, vgl. Figur 6. Sie sind jeweils senkrecht zur realen Rohrmittellinie (30) angeordnet, wobei die einzelnen Bohrungsmittellinien mit der Vertikalen einen Winkel $\beta$ zwischen 85 und 89 Winkelgraden einnehmen, vgl. Figur 9.

Anstelle der mit Fließgewinde versehenen Bohrungen (34) können auch von der Rohrinnenseite aus montierte Setzmuttern verwendet werden. Die Stangenseiten schneiden jeweils in einer Linie die entsprechende Raumteilerteilebene (6).

Die horizontale Mittenquerebene (84) des Strukturcontainers (60) liegt jeweils auf der halben Höhe des Strukturcontainers (60). Sie schneidet, nach Figur 3, jeweils die reale Rohrmittellinie (30) - von unten nach oben gezählt - in den Abständen von 275 mm, von 875 mm, von 1675 mm und von 2275 mm gegenüber der Aufstandsfläche (2). Die Schnittpunkte (32) sind von der Stangenmittellinie (31) um den Seitenversatz (V) versetzt. Der Seitenversatz (V) berechnet sich wie folgt:

$$V = T/2 - (R_o - (R_o * \tan\alpha)) - (r+a) * \cos\alpha$$

Dabei ist "T" der horizontale Topfabstand von zwei Strukturcontainern (60), wobei jeder Strukturcontainer (60) auf der anderen Seite der Tragstange (11, 12) angeordnet ist, vgl. Figur 3. Der Topfabstand (T) entspricht dem Abstand der beiden parallelen Containermittellinien (81, 82). "$R_o$" ist der maximale Durchmesser des Strukturcontainers (60), vgl. Figur 4. "r" ist der zur Außenwandung der geraden Befestigungsrohrabschnitte (23, 25) gehörende Radius, vgl. Figur 8. "a" ist die Wandstärke eines - im Ausführungsbeispiel - zwischen den Befestigungsrohrabschnitten (23, 25) und dem Strukturcontainer (60) gelegenen Abstandshalters (90), vgl. Figur 9. Die Wandstärke wird im Bereich der Verschraubung gemessen. Der Winkel a, vgl. Figur 4, entspricht dem halben Kegelwinkel der Oberfläche der Außenwandung des Strukturcontainers (60).

Der Seitenversatz "V" misst im Ausführungsbeispiel 36,3 mm. Der Topfabstand "T" beträgt in diesem Fall 350 mm.

Zwischen jeweils zwei nächstgelegenen geraden Befestigungsrohrabschnitten (23, 25) befinden sich zumindest zwei bogenförmige Rohrabschnitte (29), die s-förmig verlegt, die Rohrabschnitte z.B. harmonisch bzw. stetig miteinander verbinden. Ggf. kann zwischen beiden bogenförmigen Rohrabschnitten (29) - zur Variation der Abstände der Strukturcontainer - ein gerader Rohrabschnitt (28) eingefügt sein. Im Ausführungsbeispiel liegen die Krümmungsradien der bogenförmigen Rohrabschnitte (29) im Bereich von 300-400 mm.

Am oberen Ende der Tragstange (11, 12) befindet sich beispielsweise ebenfalls ein gerader Rohrabschnitt (27), dessen freies Ende mit einer Abschlusskappe (47) verschlossen ist, vgl. Figur 6.

An dem unteren Ende der Tragstange (12), vgl. Figuren 3, 12 und 13, ist eine z.B. kreisrunde, ebene metallische Fußplatte (41) befestigt. Sie hat einen Durchmesser von 175 mm bei einer Wandstärke von 6 mm. In ihrer Mitte weist sie eine Kegelsenkbohrung auf. Zur Befestigung an der Tragstange (12) ist an deren Innenwandung ein z.B. 6 mm starker Steg (42) mit einer zentralen Gewindebohrung (43) eingeschweißt. Der Steg (42) ist parallel zum unteren Rand des Rohres orientiert.

Er befindet sich z.B. 8 mm oberhalb des Randes. Gemäß Figur 12 ist die Fußplatte (41) z.B. mit einer M10-Senkschraube (46) an der Tragstange (12) fixiert. Ggf. weist die Fußplatte (41) eine Zentriererhebung auf, über die sie in der Innenwandung der Tragstange (12) zentriert werden kann. Ein Teil der Fußplatten (41) kann mit außermittigen Bohrungen versehen sein, um eine Fixierung an der Aufstandsfläche (2) zu ermöglichen.

Es ist auch denkbar, anstelle der planen Fußplatte (41) einen Fuß zu verwenden, dessen Oberseite z.B. sphärisch gewölbt oder kegelig geformt ist.

In Figur 13 steht die Fußplatte (41) in einem Positioniertopf (45), der an der Aufstandsfläche (2) fest montiert wird. Dazu hat der Positioniertopf (45), dessen hochstehender Rand die Fußplatte (41) seitlich zumindest bereichsweise umgibt, z.B. eine zentrale Senkbohrung. Der Positioniertopf (45) verhindert ausschließlich das versehentliche seitliche Verschieben des Raumteilers (1) auf der Aufstandsfläche (2).

Für eine gute Standfestigkeit des Raumteilers sollte der maximale Durchmesser "d" der Fußplatte (41) bzw. des Positioniertopfs (45) der folgenden Formel entsprechen:

$$d \; < \; (2 \; * \; (\frac{T}{2}))^{\frac{1}{2}}$$

Die Formel gilt für einen Aufstellwinkel (7), der größer oder gleich 90 Winkelgrade ist. Für kleinere Winkelgrade oder für Tragstangen, die am äußeren Rand des Raumteilers (1) angeordnet sind, kann anstelle der runden Fußplatte (41) auch eine ovale Fußplatte verwendet werden. Sie hat bei gleicher Wandstärke beispielsweise eine Breite von 60 mm und eine Länge von 350 mm. Bei besonders eng stehenden Tragstangen können diese auch auf einer deutlich vergrößerten Fußplatte gemeinsam montiert sein.

Die Tragstangen (11, 12) bzw. ihre theoretischen Stangenmittellinien (31) und die Containermittellinien (81, 82) sind in der Regel vertikal gegenüber einer horizontalen Aufstandsfläche (2) ausgerichtet. Eine Abweichung von ± 3 Winkelgraden von der Vertikalen ist in dieser Definition enthalten.

Die Figur 4 zeigt als Strukturcontainer den topfförmigen Container (60) im Längsschnitt. Der hier aus ABS gefertigte Container (60) hat bei einem maximalen Durchmesser von z.B. 250 mm eine Höhe von 250 mm. Er hat eine z.B. 5 mm starke Außenwandung (61), deren Außenwandoberfläche (62) z.B. die Form eines Kegelstumpfmantels aufweist. Die theoretische Spitze des Kegelstumpfmantels, die unterhalb des Containers (60) liegt, schließt einen Kegelwinkel von z.B. drei Winkelgraden ein.

Der Strukturcontainer (60) hat einen nach oben gewölbten Boden (66), der eine zentrale Öffnung aufweist. Der Containerboden (66) hat z.B. ebenfalls die Form eines Kegelstumpfmantels. Der Öffnungswinkel des Mantels beträgt z.B. 143 Winkelgrade. Die Öffnung im Boden (66) ist durch ein nach innen ragendes Bodenrohr (68) verstärkt, dessen minimaler Innendurchmesser z.B. 50 mm beträgt. Das Bodenrohr (68) verjüngt sich nach oben z.B. kegelstumpfmantelförmig. Der Kegelwinkel beträgt z.B. 6,6 Winkelgrade. Der obere Rand (69) des Bodenrohrs (68) liegt z.B. 210 mm unterhalb des oberen Randes (65) des Strukturcontainers (60). Die spezielle Form des Bodens (66) dient zum einen der Formsteifigkeit des Containers (60). Zum anderen ermöglicht das Bodenrohr (68) das Durchführen von stromführenden Schukosteckern oder datenführenden Steckern für verschiedene Elektronikgeräte wie z.B. Telefone, Rundfunkgeräte, Fernsehgeräte, Rechner, Monitore, Drucker und dergleichen.

Für den Fall, dass der Strukturcontainer (60) als Übertopf für Pflanztöpfe dient, kann sich unterhalb des Bodenrohrrandes (69) überflüssiges Gießwasser sammeln und dort verdunsten. Die Bodenwölbung begünstigt die Belüftung des Pflanztopfes.

Das Bodenrohr (68) kann durch einen auf dem Bodenrohrrand (69) aufliegenden Deckel verschlossen werden. Ebenso kann auf den Containerrand (65) verrutschsicher ein Deckel oder ein Gitter aufgelegt werden, um dort z.B. Dekorationsgegenstände oder Leuchtmittel abzustellen. Auch kann dann der Strukturcontainer (60) als Aufbewahrungsort für beliebige Kleinteile genutzt werden.

In der Außenwandung (61) des Containers (60) befinden sich zwei übereinanderliegende Bohrungsreihen (71, 72) mit jeweils z.B. acht Bohrungen (73), deren Durchmesser z.B. 7 mm misst. Die Wandungsbohrungen (73) der einzelnen Bohrungsreihe (71, 72) liegen jeweils in einer Ebene. Die obere Bohrungsreihe (71) liegt z.B. 35 mm unterhalb des Containerrands (65). Die Ebene der darunterliegenden Bohrungsreihe (72) befindet sich z.B. 180 mm unterhalb der Ebene der oberen Bohrungsreihe (71). Die Mittellinien von jeweils vier Wandungsbohrungen (73) liegen in einer Vertikalebene, in der auch die Mittellinie (81) des Containers (60) liegt. Aufgrund der acht Wandungsbohrungen (73) pro Ebene, die gleichmäßig entlang dem Umfang der Außenwandung (61) verteilt sind, ergeben sich vier auf der Mittellinie (81) sich schneidende - als Befestigungsebenen (86-89) bezeichnete - Vertikalebenen, wobei jeweils zwei benachbarte Ebenen einen Winkel von 45 Winkelgraden einschließen, vgl. Figur 5.

Selbstverständlich ist es auch möglich, die Anzahl der Befestigungsebenen (86-89) zu variieren und damit die zwischen den Befestigungsebenen liegenden Winkel größer oder kleiner zu gestalten.

Die Innenwandoberfläche (63) besteht z.B. aus 32 gleichflächigen ebenen Trapezen. Jeweils zwei Wandungsbohrungen (73) schneiden die Längshalbierende von acht Trapezen senkrecht. Die Innenwandfläche (67) des Bodens (66) besteht ebenfalls z.B. aus 32 gleichflächigen ebenen Trapezen, vgl. Figur 5.

Die Figur 6 zeigt eine perspektivische Explosionsansicht des obenliegenden Bereichs eines Vollelements (5). Zwischen zwei Tragstangen (11, 12) befindet sich ein Strukturcontainer (60). Zwischen der Außenwandung (61) des Strukturcontainers (60) und der jeweils nächstliegenden Tragstange (11, 12) ist jeweils ein Abstandshalter (90) zu sehen.

Der Abstandshalter (90), vgl. Figur 6, ist eine z.B. 250 mm lange, z.B. aus ABS gefertigte Kunststoffleiste, die z.B. 20 mm breit ist. Die Ober- und die Unterseite des Abstandshalters (90) sind jeweils schmale Streifen eines Zylindermantels, wobei die Mittellinien der Zylindermäntel in einer Ebene liegen, die den Abstandshalter (90) der Länge nach halbiert. In dieser Ebene, die nach den Figuren 1 und 6 auch die Raumteilerteilebene (6) ist, liegen auch zwei Querbohrungen (94) des Abstandshalters (90), die jeweils z.B. 35 mm von dessen Enden beabstandet sind. Der Bohrungsdurchmesser beträgt z.B. 6,5 mm. Die Unterseite bzw. die Containeranlagefläche (92), die nach der Montage am Strukturcontainer (60) anliegt, hat einen Krümmungsradius von z.B. 115 mm. Der Krümmungsradius der Oberseite bzw. der Stangenanlagefläche (93), die im montierten Zustand an der Tragstange (11, 12) anliegt, beträgt 15 mm.

Bei der Montage werden beim Strukturcontainer (60) zunächst die beiden Schrauben (74) mit ihren Unterlagscheiben (75) von innen aus in die beiden Wandungsbohrungen (73) der Befestigungsebene (86) gesteckt, um dann außen den Abstandshalter (90) mit der Containeranlagefläche (92) voraus auf die Schrauben (74) aufzustecken. Abschließend wird der Strukturcontainer (60) zusammen mit dem Abstandshalter (90) vor den beiden Fließgewinden (34) der Tragstange (11) so positioniert, dass die Schrauben (74) in diese eingeschraubt und angezogen werden können.

Die Verbindung zwischen dem Strukturcontainer (60) und der anderen Tragstange (12) erfolgt in gleicher Weise. Werden beide Tragstangen (11, 12) über die Bohrungen zweier Befestigungsebenen (86-89) am Strukturcontainer fixiert, bildet die Mittellinie (81) des Containers (60) zugleich die Abknickachse (85) des Raumteilers (1).

Hat der Container die Form eines Zylinders oder die Wandung eines Quaders, wird der - sich über die Höhe ändernde - Abstand zwischen der Tragstange (11, 12) und der Zylinder- oder Quaderwand mit einem - in Längsrichtung - keilförmigen Abstandshalter ausgeglichen.

Beim Aufbau eines Raumteilers (1) werden jeweils einzelne Raumteilerteilebenen (6) seitlich aneinandergereiht. Die einzelne Raumteilerteilebene (6) besteht dabei u.a. aus zwei nebeneinander angeordneten Tragstangen (11, 12), deren Wellentäler sich gegenüberliegen und dabei einander zugewandt sind, vgl. hierzu Figur 1. Im Bereich der Wellentäler, also an den Stellen, an denen die Tragstangen (11, 12) einen kurzen Abstand haben, sind die Strukturcontainer (60) oder vergleichbare Alternativen angeordnet, um die beiden Tragstangen (11, 12) einer Raumteilerteilebene (6) miteinander zu verbinden. Im Beispiel nach Figur 1 sind es zwei Strukturcontainer (60). An den Wellenbergen der beiden Tragstangen (11, 12) sind ebenfalls je zwei Strukturcontainer (60) - als Strukturcontainerstapel - angeordnet. Die beiden Mittellinien (81) dieser jeweils direkt übereinander gelegenen Strukturcontainer (60) bilden die seitlichen Ränder der Raumteilerteilebene (6). Sie können zugleich auch die Abknickachse (85) des Raumteilers (1) darstellen.

Die beiden Tragstangen (11, 12) sind in Kombination mit den an ihnen befestigten Strukturcontainern (60) ein Vollelement (5). Um einen Raumteiler (1) mit eigener Standfestigkeit zu schaffen, sind mindestens zwei Vollelemente (5) erforderlich, wobei zwischen deren Raumteilerteilebenen (6) im Ausführungsbeispiel jeweils ein Abknickwinkel von 45, 90, 135, 225, 270 oder 315 Winkelgraden eingeschlossen ist. Die Abknickwinkel werden durch die Befestigungsebenen (86-89) der Strukturcontainer (60) vorgegeben, vgl. Figur 5.

Die beiden Vollelemente (5) der Figuren 1 und 2 schließen einen Abknickwinkel von 135 Winkelgraden ein. Wird ein Abknickwinkel von 45 oder 315 Winkelgraden gewählt, müssen die kreisrunden Fußplatten (41) - beidseits der Abknickachse (85) - durch ovale Fußplatten ersetzt werden.

Bei der Aneinanderreihung von Vollelementen (5) entfallen bei jedem Folgeelement, das auf das Startelement folgt, diejenigen Strukturcontainer (60), die auf der Abknickachse (85) oder der Mittellinie (81) des dritten Strukturcontainerstapels liegen.

Der Raumteiler (1) kann in der Draufsicht beliebig viele geometrische Konturen abbilden. Die Konturen können einen Winkel, eine Zickzacklinie, ein Quadrat, ein Rechteck, ein Trapez, ein regelmäßiges oder unregelmäßiges Vieleck sowie andere geometrische Figuren bilden.

U.a. um die Möglichkeit zu schaffen, dem Raumteiler (1) abschnittsweise unterschiedliche Höhen zu geben oder Durchbrüche zu schaffen, wird zumindest ein Teil der Tragstangen aus zwei oder mehreren Teilstücken (13, 14) zusammengesetzt, vgl. Figuren 8, 9 und 10. Werden beispielsweise bei einer 2,5 m langen Tragstange (11, 12) drei Teilstücke vorgesehen, so hat das untere Teilstück eine Länge von z.B. 817,5 mm. Das mittlere Teilstück misst z.B. 799,2 mm, während das obere Teilstück z.B. 883,3 mm lang ist.

Nach den Figuren 8 und 9 haben die Teilstücke (13, 14) im mittleren Bereich des Befestigungsrohrabschnitts (23, 25) ihre Montagefuge (15). Die Montagefuge (15) liegt in einer Ebene, die normal zur entsprechenden realen Rohrmittellinie (30) ausgerichtet ist. Jedes Teilstück (13, 14) weist in seiner Stirnfläche eine U-förmige Verdrehsicherungsausnehmung (16) auf, die bei einer Breite von z.B. 10 mm eine Tiefe von z.B. 12,5 mm aufweist. Zusätzlich befindet sich in der linearen Verlängerung der Verdrehsicherungsausnehmung (16) jeweils eine Durchschraubbohrung (17) mit einem Durchmesser von z.B. 6,5 mm.

In den Enden der Teilstücke (13, 14) steckt mit geringem Spiel, es liegt unter 0,2 mm, ein Verbindungsrohr (50), das eine Länge von z.B. 210 mm hat, vgl. Figuren 8 und 9. Mittig weist das metallische Verbindungsrohr (50), vgl.

Figur 7, dessen Wandstärke z.B. 2 mm misst, ein Langloch (51) auf, dass bei einer Breite von 10 mm eine Länge von 25 mm hat. In der Verlängerung des Langlochs (51) befindet sich beidseits des Langlochs (51) jeweils ein M6-Fließgewinde (52). Die beiden Gewindebohrungen haben einen Abstand von 180 mm.

Um die beiden Teilstücke (13, 14) miteinander zu verbinden, werden sie auf dem Verbindungsrohr (50) zusammengeschoben, bis beide Verdrehsicherungsausnehmungen (16) deckungsgleich über dem Langloch (51) des Verbindungsrohrs (50) liegen. Damit liegen auch die Durchschraubbohrungen (17) der Teilstücke (13, 14) über den M6-Fließgewinden (52) des Verbindungsrohres (50). Um für die Verschraubung der beiden Teilstücke (13, 14) diese Position zu sichern, wird ein Abstandshalter (91) mit Verdrehsicherung benutzt.

Dieser Abstandshalter (91) weist mittig auf der Stangenanlagefläche (93) zwei Rastlaschen (95) auf, vgl. Figur 11. Zwischen den Rastlaschen (95) befindet sich ein Rastlaschenzwischenraum (96), der es den elastischen Rastlaschen (95) ermöglicht, den Abstandshalter (91) auch wieder zu demontieren.

Bei der Montage des Abstandshalters (91) werden die Rastlaschen (95) durch die Verdrehsicherungsausnehmung (16) und das Langloch (51) hindurchgesteckt. Dabei hintergreifen die Rastnasen der Rastlaschen (95) die innenliegende Kante des Langlochs (51), vgl. Figur 10. Um die lösbare Verbindung zwischen den Teilstücken (13, 14) endgültig zu fixieren, wird z.B. ein Strukturcontainer (60) über der Montagefuge (15) befestigt. Die den Strukturcontainer (60) tragenden Kombischrauben (97) verbinden kraft- und formschlüssig das Verbindungsrohr (50), die Teilstücke (13, 14), den Abstandshalter (91) und den Strukturcontainer (60).

Die nicht genutzten Gewindebohrungen der Tragstangen (11, 12) und der Teilstücke (13, 14) werden mit z.B. pilzförmigen Kunststoffkappen verschlossen.

Bezugszeichenliste:

| | |
|---|---|
| 1 | Raumteiler |
| 2 | Aufstandsfläche, Boden |
| 5 | Vollelement vom (1) |
| 6 | Raumteilerteilebene von (1) |
| 7 | Aufstellwinkel |
| 11, 12 | Tragstange, lang |
| 13, 14 | Teilstücke, kurz |
| 15 | Montagefuge |
| 16 | Verdrehsicherungsausnehmungen |
| 17 | Durchschraubbohrung |
| 21 | Fußrohrabschnitt, gerade |
| 23 | Befestigungsrohrabschnitte, rechts, erster, dritter |
| 25 | Befestigungsrohrabschnitte, links, zweiter, vierter |
| 27 | Endrohrabschnitt, gerade |
| 28 | Zwischenrohr, gerade |
| 29 | Rohrabschnitte, bogenförmig |
| 30 | Rohrmittellinie, real |
| 31 | Stangenmittellinie, theoretisch |
| 32 | Schnittpunkte |
| 34 | Befestigungsmittel, Befestigungsbohrungen, Innengewinde, Fließgewinde |
| 41 | Fußplatte, rund |
| 42 | Steg |
| 43 | Gewindebohrung |
| 45 | Positioniertopf |
| 46 | M10-Senkschraube |
| 47 | Abschlusskappe |
| 50 | Verbindungsrohr |
| 51 | Langloch, Ausnehmung |
| 52 | Gewindebohrungen, Fließgewinde |

60   Strukturcontainer, Topf, kegelstumpfmantelförmig; Container, Übertopf
61   Außenwandung
62   Außenwandoberfläche
63   Innenwandoberfläche
65   Containerrand, oben
66   Containerboden, nach oben gewölbt; Boden
67   Innenwandfläche
68   Bodenrohr
69   Bodenrohrrand, Rand

71   Bohrungsreihe, oben
72   Bohrungsreihe, unten
73   Wandungsbohrungen, containerseitig
74   Befestigungsmittel, Schrauben
75   Unterlagscheibe

81, 82   Containermittellinie
84   horizontale Mittenquerebene
85   Abknickachse des Raumteilers
86   Befestigungsebene, 0 Winkelgrade
87   Befestigungsebene, 45 Winkelgrade
88   Befestigungsebene, 90 Winkelgrade
89   Befestigungsebene, 135 Winkelgrade
90   Abstandshalter
91   Abstandshalter mit Verdrehsicherung
92   Containeranlagefläche
93   Stangenanlagefläche
94   Querbohrungen
95   Rastlaschen, Verdrehsicherungselement
96   Rastlaschenzwischenraum
97   Kombischraube, Schraube

V   Seitenversatz
T   Topfabstand
$R_o$   Topfradius am oberen Rand
r   Rohrradius
a   Abstandshalterstärke
α   halber Kegelwinkel (z.B.: 1,5°), Halbkegelwinkel
β   Winkel zwischen der Mittellinie der Gewinde (34, 52) und der Vertikalen

**Patentansprüche**

1.   Raumteiler aus vertikal stehenden Tragstangen (11, 12) und diese verbindenden Strukturcontainern (60),

- wobei an den Tragstangen (11, 12) an einander gegenüberliegenden Stangenseiten zumindest bereichsweise Befestigungsmittel (74) zum Anordnen mehrerer Strukturcontainer (60) oder anderer An- oder Zwischenbauelemente vorhanden sind,
- wobei der einzelne Strukturcontainer (60) eine Containermittellinie (81, 82) aufweist,
- wobei zwischen zwei benachbarten Tragstangen (11, 12) mindestens ein einzelner oder mehrere übereinander mit Abstand platzierte Strukturcontainer (60) angeordnet sind ,**dadurch gekennzeichnet, dass** in der Containermittellinie (81, 82) mindestens zwei sich schneidende Befestigungsebenen (86-89) ,zur Anordnung von containerseitigen Befestigungsmitteln , liegen.

2.   Raumteiler gemäß Anspruch 1, **dadurch gekennzeichnet, dass** der einzelne Strukturcontainer (60) ein formsteifer Topf ist, dessen Außenwandung die Form eines Kegelstumpfmantels hat und dessen Kegelwinkel zwischen einem und fünf Winkelgraden liegt.

3. Raumteiler gemäß Anspruch 1, **dadurch gekennzeichnet, dass** der Strukturcontainer (60) vier vertikale Befestigungsebenen (86-89) aufweist, die sich auf der Containermittellinie (81, 82) schneiden und jeweils einen Winkel von 45 Winkelgraden einschließen.

4. Raumteiler gemäß Anspruch 1, **dadurch gekennzeichnet, dass** die Containermittellinie (81, 82) eines zwischen zwei Tragstangen (11, 12) angeordneten Strukturcontainers (60) eine Abknickachse (85) des Raumteilers (1) darstellt.

5. Raumteiler gemäß Anspruch 1, **dadurch gekennzeichnet, dass** zwischen dem Strukturcontainer (60) und den ihn tragenden Tragstangen (11, 12) jeweils ein Abstandshalter (90, 91) mit einer minimalen Wandstärke "a" angeordnet ist.

6. Raumteiler gemäß den Ansprüchen 1 und 2, **dadurch gekennzeichnet, dass** die Befestigungsbohrungen (34) für die Strukturcontainer (60) an den geraden Befestigungsrohrabschnitten (23, 25) der Tragstangen (11, 12) in den Bereichen angeordnet sind, deren Stangenseite von der Vertikalen um den Kegelhalbwinkel α weggekippt sind, wobei der Kegelhalbwinkel α dem halben Kegelwinkel des Strukturcontainers (60) entspricht.

7. Raumteiler gemäß der Ansprüche 5 und 6, **dadurch gekennzeichnet, dass** die Mitte des Befestigungsrohrabschnitts (23, 25), die auf der halben Höhe des einzelnen Strukturcontainers (60) liegt, von der theoretischen Stangenmittellinie (31) um einen Seitenversatz "V" versetzt ist, der sich wie folgt berechnet:

$$V = T/2 - (R_o - (R_o * \tan\alpha)) - (r+a) * \cos\alpha$$

8. Raumteiler gemäß Anspruch 1, **dadurch gekennzeichnet, dass** zwischen zwei direkt übereinander an einer Tragstange (11, 12) angeordneten Strukturcontainern (60) ein Abstand ist, der von Containermitte zu Containermitte mindestens 1000 mm misst.

9. Raumteiler gemäß Anspruch 1, **dadurch gekennzeichnet, dass** zwei versetzt übereinander an verschiedenen Stangenseiten einer Tragstange (11, 12) angeordnete Strukturcontainer (60) einen Höhenversatz haben, der von Containermitte zu Containermitte - parallel zur theoretischen Stangenmittellinie (31) - mindestens 300 mm misst.

10. Raumteiler gemäß Anspruch 1, **dadurch gekennzeichnet, dass** zwei Tragstangen (11, 12) und die dazugehörenden Strukturcontainer (60) ein Vollelement (5) bilden, bei dem die theoretischen Stangenmittellinien (31), die realen Rohrmittellinien (30) und die Mittellinien (82) der an den Tragstangen (11, 12) befestigten Strukturcontainer (60) in einer Ebene liegen.

11. Raumteiler gemäß Anspruch 1, **dadurch gekennzeichnet, dass** die einzelne Tragstange (11, 12) in zwei oder mehr Teilstücke (13, 14) geteilt ist, wobei die Teilstücke (13, 14) in der jeweiligen Montagefuge (15) verdrehsicher zueinander angeordnet sind.

12. Raumteiler gemäß Anspruch 11, **dadurch gekennzeichnet, dass** beidseits der Montagefuge (15) in beiden Teilstücken (13, 14) einer Schnittstelle ein Verbindungsrohr (50) angeordnet ist.

13. Raumteiler gemäß der Ansprüche 11 und 12, **dadurch gekennzeichnet, dass** die jeweilige Montagefuge (15) im mittleren Bereich des entsprechenden Befestigungsrohrabschnitts (23, 25) liegt und ein Abstandshalter (91) mit mindestens einem in Ausnehmungen (16, 51) der Teilstücke (13, 14) und des Verbindungsrohres (50) eingreifenden Verdrehsicherungselement (95) im Bereich der Montagefuge (15) eine formschlüssige Verdrehsicherung gewährleistet.

14. Raumteiler gemäß Anspruch 1, **dadurch gekennzeichnet, dass** er frei im Raum aufgestellt ist.

**Claims**

1. Room partition made of vertically standing support rods (11, 12) and structural containers (60) connecting these,

   - wherein, at least in some areas, fastening means (74) for arranging a plurality of structural containers (60) or other attachment or intermediate components are present on the support rods (11, 12) on opposite sides of the rods,
- wherein the individual structural container (60) comprises a container centreline (81, 82),
- wherein at least one or a plurality of structural containers (60) placed on top of one another at a distance are arranged between two adjacent support rods (11, 12), **characterized in that** at least two intersecting mounting planes (86-89) lie on the container centreline (81, 82) for the arrangement of container-side fastening means.

2. Room partition according to Claim 1, **characterized in that** the individual structural container (60) is a rigid pot whose outer wall has the shape of a truncated cone shell and whose taper angle is between one and five angular degrees.

3. Room partition according to Claim 1, **characterized in that** the structural container (60) comprises four vertical mounting planes (86-89) which intersect at the container centreline (81, 82) and each form a 45-degree angle.

4. Room partition according to Claim 1, **characterized in that** the container centreline (81, 82) of a structural container (60) arranged between two support rods (11, 12) represents a bending axis (85) of the room partition (1) .

5. Room partition according to Claim 1, **characterized in that** a spacer (90, 91) with a minimum wall thickness "a" is respectively arranged between the structural container (60) and the supporting rods supporting it (11, 12).

6. Room partition according to Claims 1 and 2, **characterized in that** the mounting holes (34) for the structural containers (60) on the straight fixing pipe sections (23, 25) of the support rods (11, 12) are arranged in the areas whose rod side are tilted away from the vertical around the cone half angle $\alpha$, wherein the cone half angle $\alpha$ corresponds to the half cone angle of the structure container (60).

7. Room partition according to Claims 5 and 6, **characterized in that** the centre of the fixing pipe section (23, 25), which is at half the height of the individual structural container (60), is offset from the theoretical rod centreline (31) by a side offset "V", which is calculated as follows:

$$V = T/2 - (R_o - (R_o * \tan\alpha)) - (r+a) * \cos\alpha$$

8. Room partition according to Claim 1, **characterized in that**, between two structural containers (60) arranged directly on top of each other on a support rod (11, 12), there is a distance that measures at least 1,000 mm from container centre to container centre.

9. Room partition according to Claim 1, **characterized in that** two structural containers (60) arranged offset on top of each other on different rod sides of a support rod (11, 12) have a height offset which measures to be at least 300 mm from container centre to container centre - parallel to the theoretical rod centreline (31) .

10. Room partitions according to Claim 1, **characterized in that** two support rods (11, 12) and the associated structural containers (60) form a total element (5) in which the theoretical rod centrelines (31), the real pipe centrelines (30) and the centrelines (82) of the structural containers (11, 12) attached to the support rods (60) are on a single plane.

11. Room partition according to Claim 1, **characterized in that** the single support rod (11, 12) is divided into two or more sections (13, 14), wherein the sections (13, 14) are arranged towards each other in a torsion-proof manner within the respective assembly joint (15).

12. Room partition according to Claim 11, **characterized in that** a connecting pipe (50) is arranged on both sides of the assembly joint (15) in both sections (13, 14) of an interface.

13. Room partition according to Claims 11 and 12, **characterized in that** the respective assembly joint (15) is in the middle area of the corresponding fixing pipe section (23, 25) and a spacer (91) with at least one anti-torsion element (95) engaging into recesses (16, 51) of the sections (13, 14) and of the connecting pipe (50) ensures a positive-locking torsion protection in the area of the assembly joint (15).

14. Room partition according to Claim 1, **characterized in that** it is freely positioned in the room.

**Revendications**

**1.** Séparateur d'espace, constitué de tringles porteuses (11, 12) debout à la verticale et de conteneurs structurés (60), reliant ces dernières,

- sur les tringles porteuses (11, 12), sur des faces mutuellement opposées des tringles étant présents au moins par endroit des moyens de fixation (74), destinés à y placer plusieurs conteneurs structurés (60) ou d'autres éléments rapportés ou intermédiaires,
- le conteneur structuré (60) individuel comportant une ligne médiane (81, 82) de conteneur,
- entre deux tringles porteuses (11, 12) voisines étant placé(s) au moins un individuel ou plusieurs conteneurs structurés (60), superposés avec un écart, **caractérisé en ce que** dans la ligne médiane (81, 82) de conteneur se situent au moins deux plans de fixation (86 à 89) qui se recoupent, destinés à y placer des moyens de fixation latéraux de conteneurs.

**2.** Séparateur d'espace selon la revendication 1, **caractérisé en ce que** le conteneur structuré (60) est un pot de forme rigide, dont la paroi externe a la forme d'une enveloppe tronconique et dont l'angle conique se situe entre un et cinq degrés angulaires.

**3.** Séparateur d'espace selon la revendication 1, **caractérisé en ce que** le conteneur structuré (60) comporte quatre plans de fixation (86 à 89) verticaux, qui se recoupent sur la ligne médiane (81, 82) de conteneur et dont chacun inclut un angle de 45 degrés angulaires.

**4.** Séparateur d'espace selon la revendication 1, **caractérisé en ce que** la ligne médiane (81, 82) de conteneur d'un conteneur structuré (60) placée entre deux tringles porteuses (11, 12) représente un point d'angulation (85) du séparateur d'espace (1).

**5.** Séparateur d'espace selon la revendication 1, **caractérisé en ce qu'**entre le conteneur structuré (60) et la tringle porteuse (11, 12) qui le porte, est placé chaque fois un espaceur (90, 91) d'une épaisseur de paroi minimale « a ».

**6.** Séparateur d'espace selon les revendications 1 et 2, **caractérisé en ce que** les perçages de fixation (34) pour les conteneurs structurés (60) sont placés sur les segments (23, 25) de tubes de fixation rectilignes des tringles porteuses (11, 12), dans les zones dont les faces de tringles sont basculées à partir de la verticale de la valeur du demi-angle de conicité a, le demi-angle de conicité $\alpha$ correspondant à la moitié de l'angle de conicité du conteneur structuré (60).

**7.** Séparateur d'espace selon les revendications 5 et 6, **caractérisé en ce que** le centre du segment (23, 25) de tube de fixation qui se situe à mi-hauteur du conteneur structuré (60) individuel est décalé par rapport à la ligne médiane (31) de tringle de la valeur d'un décalage latéral « V », qui se calcule de la manière suivante :

$$V = T/2 - (R_o - (R_o * tan\alpha)) - (r + a) * cos\alpha$$

**8.** Séparateur d'espace selon la revendication 1, **caractérisé en ce qu'**entre deux conteneurs structurés (60) directement superposés sur une tringle porteuse (11, 12) se trouve un écart, qui de centre de conteneur à centre de conteneur, mesure au moins 1000 mm.

**9.** Séparateur d'espace selon la revendication 1, **caractérisé en ce que** deux conteneurs structurés (60) superposés avec un décalage sur différentes faces de tringle d'une tringle porteuse (11, 12) présentent un décalage en hauteur, qui de centre de conteneur à centre de conteneur, mesure au moins 300 mm à la parallèle de la ligne médiane (31) théorique de la tringle.

**10.** Séparateur d'espace selon la revendication 1, **caractérisé en ce que** deux tringles porteuses (11, 12) et les conteneurs structurés (60) associés forment un élément plein (5), sur lequel les lignes médianes (31) théoriques des tringles, la ligne médiane (30) réelle de tube et les lignes médianes (82) des conteneurs structurés (60) fixés sur les tringles porteuses (11, 12) se situent dans un plan.

**11.** Séparateur d'espace selon la revendication 1, **caractérisé en ce que** la tringle porteuse (11, 12) individuelle est divisée en deux tronçons (13, 14) ou plus, sur la jointure de montage (15) concernée, les tronçons (13, 14) étant placés de manière solidaire en rotation.

**12.** Séparateur d'espace selon la revendication 11, **caractérisé en ce que** de part et d'autre de la jointure de montage (15), dans les deux tronçons (13, 14) d'une interface est placé un tube de raccordement (50).

**13.** Séparateur d'espace selon les revendications 11 et 12, **caractérisé en ce que** la jointure de montage (15) concernée se situe dans la zone centrale du segment (23, 25) de tube de fixation correspondant et **en ce que** dans la zone de la jointure de montage (15), un espaceur (91) assure par au moins un élément (95) de blocage en rotation qui s'engage dans des évidements (16, 51) des tronçons (13, 14) et du tube de raccordement (50) un blocage en rotation par complémentarité de forme.

**14.** Séparateur d'espace selon la revendication 1, **caractérisé en ce qu'**il est implanté librement dans l'espace.

## Fig. 1

## Fig. 2

# Fig. 3

**Fig. 4**

**Fig. 5**

**Fig. 6**

34    81   75   74   73

30

6

63

92

34

86

90

47

27

90

94

93

15

94

11

73    61    85    60

12

**Fig. 7**

51   50   52

EP 3 815 582 B1

**Fig. 8**

13
30
16
15
16
r
14
50

**Fig. 9**

13
52
97
75
91
61
60
95
β
51
50
17
14
α
a

**Fig. 12**

12
46
43
42
41

**Fig. 10**

14
91
50

**Fig. 13**

21
41
2  45

**Fig. 11**

93
96  95
94  91

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29716761 U1
- EP 3245863 A1